(19) Europäisches Patentamt
European Patent Office
Office européen des brevets

(11) **EP 3 447 564 A1**

(12) **EUROPEAN PATENT APPLICATION**
published in accordance with Art. 153(4) EPC

(43) Date of publication:
**27.02.2019  Bulletin 2019/09**

(21) Application number: **16899117.2**

(22) Date of filing: **01.07.2016**

(51) Int Cl.:
**G02F 1/01** [(2006.01)]

(86) International application number:
**PCT/CN2016/088081**

(87) International publication number:
**WO 2017/181530 (26.10.2017 Gazette 2017/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.04.2016  CN 201610249928**

(71) Applicant: **The Institute of Optics and Electronics The Chinese Academy of Sciences Chengdu, Sichuan 610209 (CN)**

(72) Inventors:
• **LUO, Xiangang**
  **Chengdu**
  **Sichuan 610209 (CN)**
• **PU, Mingbo**
  **Chengdu**
  **Sichuan 610209 (CN)**

• **ZHAO, Zeyu**
  **Chengdu**
  **Sichuan 610209 (CN)**
• **LI, Xiong**
  **Chengdu**
  **Sichuan 610209 (CN)**
• **WANG, Yanqin**
  **Chengdu**
  **Sichuan 610209 (CN)**
• **MA, Xiaoliang**
  **Chengdu**
  **Sichuan 610209 (CN)**
• **WANG, Changtao**
  **Chengdu**
  **Sichuan 610209 (CN)**

(74) Representative: **Gunzelmann, Rainer Wuesthoff & Wuesthoff Patentanwälte PartG mbB Schweigerstraße 2 81541 München (DE)**

(54) **BROADBAND ELECTROMAGNETIC WAVE PHASE MODULATING METHOD AND METASURFACE SUB-WAVELENGTH STRUCTURE**

(57) The present invention relates to a method for regulating the phase of a wide-band electromagnetic wave by using a meta-surface sub-wavelength structure and the meta-surface sub-wavelength structure. In the invention, the sub-wavelength structure is used as a basic unit of the meta-surface, and the basic unit is arranged in an array according to a regular order determined by the predetermined phase to generate a geometrical phase distribution with the spatial continuity and the spectral achromaticity between 0 and $2\pi$, so that the phase is controlled and modulated in a two dimensional plane. The operating bandwidth of the present invention may cover the entire electromagnetic spectrum, and a variety of optical devices such as reflective focusing/imaging elements, transmission focusing/imaging elements, prisms, orbital angular momentum generator may be realized. As an extension of the phase regulation, the present invention may also realize other novel electro-magnetic wave functions such as wideband absorption and radar cross section reduction.

figure 1

**Description**

CROSS-REFERENCE TO RELATED APPLICATION(S)

This present application claims priority to a Chinese Application No. 201610249928.2 filed on April 20, 2016 and entitled "BROADBAND ELECTROMAGNETIC WAVE PHASE MODULATING METHOD AND Meta SURFACE SUB-WAVELENGTH STRUCTURE", which is incorporated herein by reference in their entirety.

**Technical Field**

The present disclosure relates to a field of light field control, and more particularly to a method and a meta-surface sub-wavelength structure for performing wide-band electromagnetic wave phase modulation by using a meta-surface sub-wavelength structure.

**Background**

The phase control plays an essential role in various optical components. In particular, in planar photonic devices including planar lenses, beam splitters, prisms and so on, it is a core technology to adjust optical phases in the plane in a range of [0, 360°].

Traditional phase control technologies include the following types.

1. A surface shape and thickness d of an optical material (such as a traditional curved optical lens and micro lenses) are changed to implement a phase control;

2. Nano-scale apertures are manufactured on a thick metal thin film (d ~ A) to change phase delay by adjusting the size of the apertures. Such a technique is described, for example, in a Chinese invention application with a number of CN201310312163.9 and entitled "surface plasmon lens based on artificial electromagnetic materials";

3. Sub-wavelength apertures are manufactured on a thick metal film or dielectric materials to adjust phase delay by changing the equivalent refractive index to implement a gradient refractive index distribution. For example, such a technique is illustrated in a Chinese invention application with an application number of CN200710176013.4 and entitled "A three-dimensional sub-wavelength metal structure lens", a Chinese invention application with an application number of CN20081010602.6 and entitled "A three-dimensional sub-wavelength metal structure lens with depth modulation" and a Chinese invention application with an application number of CN201410317149.2 and entitled "A sub-wavelength aperture structure with amplitude and phase modulation;

4. A discrete metal antenna or nano-rod is manufactured on a metal film or dielectric material having a thickness much smaller than the wavelength (d << $\lambda$) to implement a non-uniform geometric phase distribution by rotating the metal antenna or nano-rod. For example, such a technique is illustrated in a Chinese utility model application with an application number of 201520096254.8 and entitled "a transmissive silicon nanometer array optical beam splitter".

In the second, third and fourth techniques as mentioned above, it is usual that one unit structure corresponds to one phase distribution, so the resulting phase distribution is discrete and it is difficult to get a broadband performance.

A traditional amplitude-type diffraction element has high order diffraction, so it is impossible to implement phase control. The traditional phase-type diffraction optical element implements the phase control by changing the thickness, so that the components are large and heavy and can't meet the requirement of high efficient integration for the current applications.

In recent years, as a two-dimensional metamaterial, it is verified that a meta-surface structure based on a sub-wavelength structure may implement an overall control of electromagnetic wave amplitude, phase and polarization. A wavefront may be arbitrarily modulated by using a meta-surface assisted reflection and refraction laws. The metasurface structure may be widely applied in stealth technology, antenna technology, microwave and terahertz devices, optoelectronic devices or the like due to its plentiful and unique physical properties and its flexible control of electromagnetic waves. However, the bandwidth issue of the sub-wavelength structure of the meta-surface structure becomes an important obstacle to its practical application.

**SUMMARY OF THE INVENTION**

The present disclosure provides a method for regulating the phase of a wide-band electromagnetic wave by using a meta-surface sub-wavelength structure. The phase distribution produced by the sub-wavelength structure of the present invention is determined by the surface structure.

The present invention provides a method for regulating a phase of a wide-band electromagnetic wave by using a meta-surface sub-wavelength structure, comprising the steps of: (1) a curve obtained by integrating the phase distribution function of the predefined spatial variation; (2) a closed area defined by the curve defines the shape of the sub-wavelength structure basic unit, which acts as a basic unit of the meta-surface structure and is arranged in accordance with a rule determined by the predetermined phase to form a meta-surface sub-wavelength structure array; and irradiating the meta-surface sub-wavelength structure with circularly polarized light to produce a light beam having the phase of the spatial variation.

According to another aspect of the present invention, there is also proposed a meta-surface sub-wavelength structure comprising: a plurality of sub-wavelength structure basic unit, wherein the sub-wavelength structure basic units are arranged in accordance with a rule determined by a predetermined phase to form a meta-surface sub-wavelength structure array in which the shape of the sub-wavelength structure basic unit is defined by the following curve: (1) a curve formed by integrating the phase distribution function of the predefined spatial variation; (2) a closed area defined by the curve defines a shape of the sub-wavelength structure basic unit.

As compared with the prior art, the present disclosure has the advantages that the single sub-wavelength structure of the invention can produce the linear phase distribution in the range of $[0,2\pi]$, combine the optical and topological characteristics of the sub-wavelength structure, nano-scale single-layer control of photons in the plane to achieve any phase distribution, and can work in the wide spectrum range (covering infrared, terahertz, microwave and other bands) work, the bandwidth is much larger than traditional structures available in the construction of ultra-thin, lightweight optical devices.

**BRIEF DESCRIPTION OF THE DRAWINGS**

Figure 1 is a schematic view of a sub-wavelength structure in which circularly polarized light is incident vertically in an embodiment of the present invention;

Figure 2 is the scanning electron microscopy (SEM) image of a single sub-wavelength structure;

Figure 3 shows the light intensity test of the spin-Hall effect of circularly polarized light through a single sub-wavelength structure.

Figure 4 shows the simulation of the light intensity of the circular-polarized light through a single sub-wavelength structure.

Figure 5 is a SEM image of another meta-surface sub-wavelength structure sample of an embodiment of the present invention;

Figure 6 is a schematic diagram of a diffraction pattern in which a beam is deflected by a sub-wavelength structure array according to an embodiment of the present invention;

Figure 7 is a schematic view of a meta-surface sub-wavelength structure sample for generating a focused beam according to an embodiment of the present invention;

Figure 8 is a schematic diagram of a phase diagram of a meta-surface sub-wavelength structure sample producing a focused beam according to an embodiment of the present invention;

Figure 9 is a test chart of a meta-surface sub-wavelength structure sample for generating a focused beam according to an embodiment of the present invention;

Figure 10 is a SEM image of another meta-surface sub-wavelength structure sample for Bessel light beam in an embodiment of the present invention;

Figure 11 is the intensity distribution of the right-handed circularly polarized light RCP through the Bessel generator;

Figure 12 is a schematic view of an meta-surface sub-wavelength structure sample for OAM beam generation in an embodiment of the present invention;

Figure 13 is a SEM image of another meta-surface sub-wavelength structure sample of an embodiment of the present invention;

Figure 14 is an intensity pattern at a few microns away from the surface of the sample at different wavelengths and polarizations according to an embodiment of the present invention.

## DETAILED DESCRIPTION OF PREFERRED EMBODIMENTS

Reference will now be made to the embodiments of the present invention, examples of which are illustrated in the accompanying drawings, characterized by like numerals refer to like elements throughout. The following examples of the invention will be described with reference to the accompanying drawings.

The following description of the present invention will be described in detail with reference to the accompanying drawings, but the scope of the present invention is not limited to the following embodiments, and the following detailed description is intended to be illustrative only and not restrictive. Those skilled in the art will, from one of the following embodiments, implement the entire contents of the claims, those skilled in the art, without departing from the spirit and scope of the invention as defined by the present invention in the context of the protection, many forms may be made, which are within the protection of the present invention.

According to an aspect of the present invention, there is provided a method for regulating a phase of a wide-band electromagnetic wave by using a meta-surface sub-wavelength structure, comprising the steps of: (1) integrating a pre-defined spatial variation phase distribution function to obtain a curve; (2) the closed region defined by the curve defines a shape of the sub-wavelength structure basic unit, the sub-wavelength structure acting as a basic unit of the meta-surface, arranging a sub-wavelength structure array in accordance with a predetermined rule determined by the predetermined phase; and the polarized light irradiates the meta-surface sub-wavelength structure to produce a light beam having the phase of the spatial variation.

Preferably, the sub-wavelength structure basic unit is completely continuous in each cycle.

Preferably, two curves are obtained by translating the curve along the optical axis a distance $\Delta$ and forming a closed area by connecting the ends of the two curves together, the closed area defining the shape of the sub-wavelength structure basic unit.

Preferably, the translated distance of the basic unit of each of the sub-wavelength structures $\Delta<\lambda$, and the horizontal length $\Lambda>\lambda$, where $\lambda$ is the wavelength of the incident electromagnetic wave.

Preferably, the basic unit or periodic array of the sub-wavelength structure produces a deflection of $\theta=\sigma \arcsin(\lambda/\Lambda)$ on the circularly polarized light, where $\sigma = \pm 1$ represents the left and right circular polarization.

Preferably, the said sub-wavelength structure array may focus the parallel beams in accordance with a pre-defined phase arrangement for optical Imaging.

Preferably, the sub-wavelength structure array may be arranged in accordance with a predefined phase arrangement so that the parallel beams pass through the structure to produce a beam with an orbital angular momentum (OAM).

Preferably, the sub-wavelength structure array may be arranged in accordance with a predefined phase arrangement so that the parallel beams pass through the structure to produce low and high order Bessel (HOBB) beams.

Preferably, the sub-wavelength structure may be scaled for use in other band electromagnetic waves.

According to another aspect of the present disclosure, there is also proposed a meta-surface sub-wavelength structure, characterized by comprising: a plurality of sub-wavelength structure basic units, wherein the sub-wavelength structure basic units are arranged in accordance with a rule determined by a predetermined phase to form a meta-surface sub-wavelength structure array in which the shape of the sub-wavelength structure basic unit is defined by the following curve: (1) a curve formed by integrating the phase distribution function of the predefined spatial variation; (2) a closed area formed by the curve defines a shape of the sub-wavelength structure basic unit.

Preferably, two curves are obtained by translating the curve along the optical axis a distance $\Delta$ smaller than the wavelength of the incident electromagnetic wave, and forming a closed area by connecting the ends of the two curves together, the closed area defining the shape of the sub-wavelength structure basic unit.

Preferably, the sub-wavelength structure basic unit is manufactured on a thin film having a thickness of 30 nm$<$Tg$<$ 300 nm.

Preferably, the film is made of a metal or a dielectric.

Preferably, the metal is gold, silver, copper, aluminum, chromium, cadmium, gold alloy, silver alloy, copper alloy, zinc alloy or aluminum alloy.

Preferably, the dielectric is one or more of the following semiconductor materials: monocrystalline silicon, polysilicon, germanium, silicon dioxide or gallium arsenide.

Preferably, the sub-wavelength structure of the substrate uses a different material in a different band.

Preferably, the materials used for the substrate in the optical band include a dielectric material such as quartz, plexiglass, silicon, or the like.

Preferably, the material used by the substrate in the microwave section comprises a microwave dielectric material such as FR4.

Preferably, the material used for the substrate in the infrared and terahertz bands comprises an infrared dielectric material such as silicon and germanium.

Preferably, the substrate has a planar structure or a curved structure.

Preferably, the said sub-wavelength structure may be prepared on a film layer.

Preferably, the sub-wavelength structure comprises a complementary structure of apertures or apertures.

The working principle of the meta-surface sub-wavelength structure of the present invention will be described in detail with reference to a specific structure.

A single meta-surface sub-wavelength structure produces a Spin-Hall effect

The specific steps of the embodiments of the present invention are as follows:

(1) Firstly,a linear phase distribution of $\Phi$ (x) = $2\pi$x / $\Lambda$ is determined to produce the spin-Hall effect;

(2) The sub-wavelength equation can be obtained by integrating the above-mentioned phase distribution function as follows:

$$y = \frac{\Lambda}{\pi} \ln(|\sec(\pi x / \Lambda)|), \qquad (1)$$

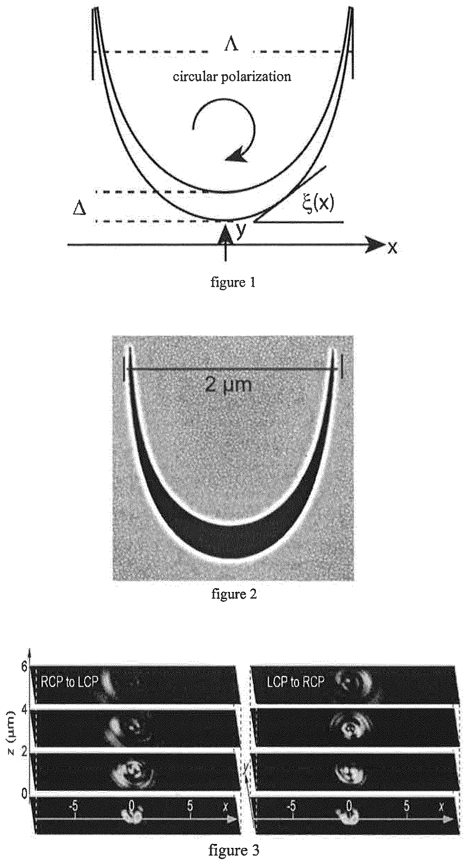

Where $\Lambda$ is the horizontal length of a curve. The curve is translated along the y-axis a distance $\Delta$ smaller than the wavelength, and the resulting sub-wavelength structure is shown in Figure 1. The closed area formed by the curve defines the shape of the sub-wavelength structure basic unit. Specifically, the end points of the original curve and the translated curve are fixed together, and the curve is translated by a distance $\Delta$ smaller than the wavelength along the y-axis to obtain the sub-wavelength structure.

(3) A sub-wavelength sample (Fig. 2) was manufactured on a 120 nm thick gold (Au) film by focusing ion beam (FIB) milling with a base material of 1 mm thick quartz. The sub-wavelength sample has a shape defined by the closed curve.

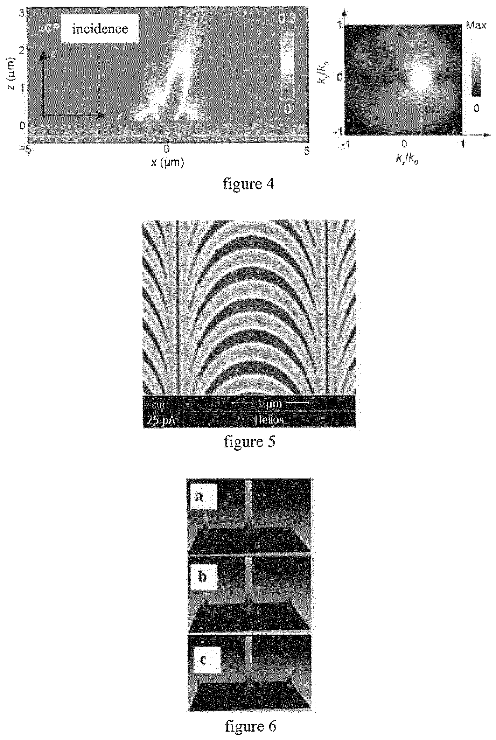

(4). The sample as shown in figure 2 is irradiated bya a circular polarized light to generate a linear geometric phase of $\Phi(x) = 2\sigma\xi(x)$, wherein $\xi$ (x) is the curve between the tangent of the curve and the x-axis, which is varied between left and right endpoints from $-\pi$ / 2 to $\pi$ / 2, where $\sigma = \pm 1$ represents left and right circular circular polarization (LCP and RCP), by referring to Figures 3 and 4. Figure 3 shows the spin-Hall effect light intensity test for circularly polarized light passing through a single sub-wavelength structure. Figure 4 shows the light intensity simulation for the circular-polarized light passing through a single structure to produce spin-Hall effect. It is thus shown that the scheme provided by the present invention is capable of achieving a spin-Hall effect.

The sub-wavelength array is used to generate the deflection of the beam

The specific steps of this embodiment are as follows:

(1) Determine the linear phase distribution $\Phi(x) = k_a x$ that produces the beam deflection

(2) The curve equation for the above-mentioned phase distribution function is given as follows:

$$y = -\frac{2\sigma}{k_a} \ln(|\cos(k_a x / 2)|) \qquad (2)$$

Where $k_a$ is the wave vector in the x direction of the structure, $\sigma = 1$ is chosen, and the curve is translated by $\Delta$ along the y axis to obtain the sub-wavelength structure as shown in Figure 1.

(3) The resulting sub-wavelength structure is arranged in a linear array (Fig. 5), the period Px = 2 μm in the x direction, and the period Py = Δ = 200 nm in the y direction. A sample was manufacturedon a 120 nm thick gold (Au) film by FIB milling with a base material of 1 mm thick quartz.

(4) As shown in Figure 6a and 6c, the samples obtained at the CPL (A = 632.8 nm) have a beam deflection angle of ± 18.5 °, respectively, which are equivalent to the theoretical value of ± 18.45 ° by the formula of $\theta = \sigma\sin^{-1}(\lambda/P_x)$.

(5) As shown in Figure 6b, LCP and RCP are symmetrically deflected when the linearly polarized (LP) beam irradiates the sub-wavelength structure.

The above experimental results illustrate that the present invention provides a scheme capable of generating a deflection of the beam.

The sub-wavelength array is used to generate a focused beam

The specific steps of this embodiment are as follows:

(1) Determine the phase distribution that produces the focused beam:

$$\Phi(r,\varphi) = \sigma\left(k\sqrt{r^2 + f^2} + l\varphi\right), \qquad (3)$$

Where k = 2π/λ is the wave number in vacuum. The design parameters are topological charge I = 2, f = 40 μm. The inner and outer radii of the lens are 10.6 and 20.8 μm.

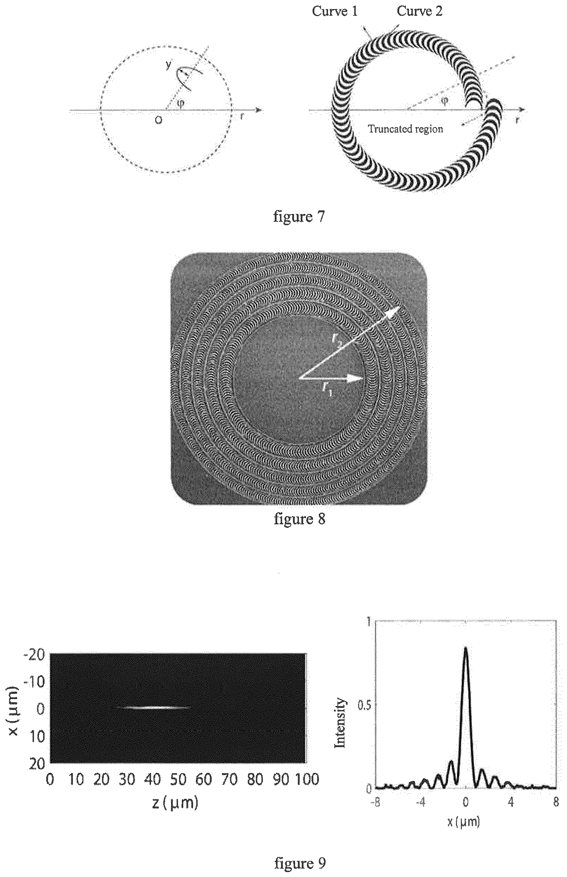

(2) The above-mentioned phase distribution is integrated to obtain a curve, and the curve is translated along the y-axis to obtain a sub-wavelength structure, and the resulting sub-wavelength structure are arranged in an array according to the design process of Fig. 7, and in the case of a gold film having a thickness of 120 nm on the production of a sub-wavelength sample (Figure 8), the base material is 1 mm thick quartz.

(3) As shown in Fig. 9, the sample produces a focused beam under RCP (σ = -1, λ = 632.8 nm) illumination.

The Bessel beam is generated using a sub-wavelength structure array

The specific steps of this embodiment are as follows:

(1) Determine the phase distribution of the Bessel beam that can be produced:

$$\Phi(r,\varphi) = \sigma\left(k_r r + l\varphi\right), \qquad (4)$$

Where kr is the transverse wave vector of the Bessel beam, the design parameters are kr = karcsin (λ / Λ), Λ = 2 μm, and the topological charge I = 0.

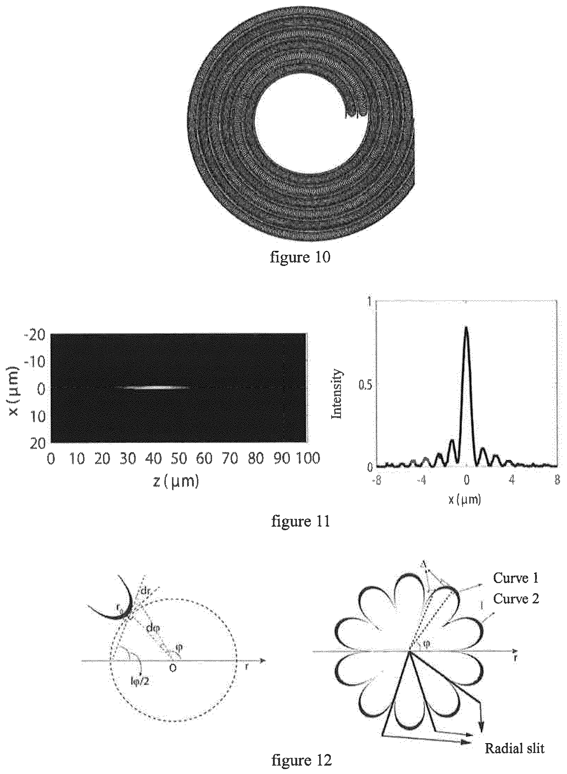

(2)The phase distribution function is integrated to obtain a curve, and the curve is translated by Δ along the y-axis to obtain a sub-wavelength structure (Fig. 10). A sub-wavelength structure sample is manufactured on a gold film having a thickness of 120 nm, for 1 mm thick quartz.

(3) The sample can be measured by microscopy under the illumination of RCP (σ = -1, λ = 785nm), as shown in Fig. ?? From the experimental results described above, the present invention provides a scheme capable of producing a Bessel beam.

An ordinary orbital angular momentum (OAM) beam is generated by using sub-wavelength structure arrays

The conventional OAM beam has a helical phase in the azimuthal direction. The specific steps of this embodiment are as follows:

(1) Determine the curvilinear equation in polar coordinates according to the desired phase distribution:

$$r = (r_0 + m\Delta)\left(\left|\sec[\frac{(l-2)\varphi}{2}]\right|\right)^{\frac{2}{2-l}}, m = 0,1,2,3... \qquad (5)$$

Where $r_0$ is the position of the vertex of the innermost curve, $\Delta$ is the distance between two vertices of the adjacent curve, and m is the sequence number of these curves. According to the formula, this sub-wavelength structure can be used to generate OAM beams with arbitrary topological charge.

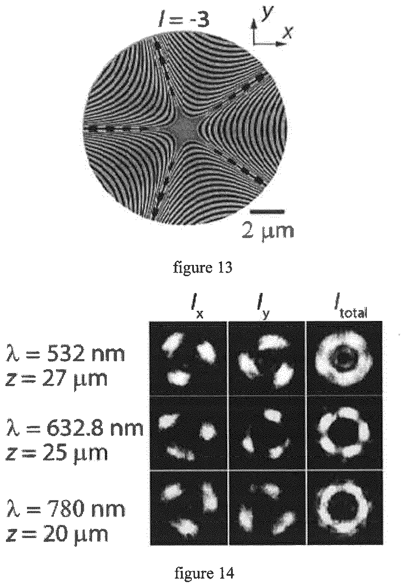

(2) The resulting sub-wavelength structure was arranged in an array according to the design process of Fig. 12, and a sub-wavelength structure sample of topological charge I = -3 was prepared by FIB milling on a 120 nm thick gold (Au), as shown in Figure 13, where $\Delta$ = 200 nm, $r_0$ = 1.5 $\mu$m, and the base material is 1 mm thick quartz.

(3) In the CPL illumination, the sub-wavelength structure produces two beams of the same intensity at the same time. The beam has a uniform phase and the other has a helical phase, which is the generated OAM beam.

(4) This embodiment demonstrates the broadband performance of the present invention using three laser sources $\lambda$ = 532, 632.8 and 780 nm. As shown in Fig. 14, the intensity pattern is a few microns away from the surface of the sample at different wavelengths and polarizations. For the x and y polarization components, it can be seen that the rotation surrounds the center of the beam, where the modulus and sign of I are determined by the number of turns and the direction of the torsion. From the above experimental results, it is shown that the present invention provides a scheme capable of generating orbital angular momentum beams.

While the present invention has been particularly shown and described with reference to exemplary embodiments of the present invention, it will be understood by those of ordinary skill in the art that various changes and departures from the spirit and scope of the invention as defined by the appended claims. These embodiments carry out various changes in form and detail.

## Claims

1.  A method for regulating a phase of a wide-band electromagnetic wave by using a meta-surface sub-wavelength structure, comprising the steps of:
    forming a sub-wavelength structure basic unit, **characterized by** the shape of the sub-wavelength structure basic unit is defined by the following curve:

    (1) a curve obtained by integrating the phase distribution function of the predefined spatial variation;
    (2) a closed area defined by the curve defines the shape of the sub-wavelength structure basic unit, which acts as a basic unit of the meta-surface structure and are arranged in accordance with a rule determined by the predetermined phase to form a meta-surface sub-wavelength structure array; and irradiating the meta-surface sub-wavelength structure with circularly polarized light to produce a light beam having the phase of the spatial variation.

2.  The method for regulating a phase of a wide-band electromagnetic wave by using a meta-surface sub-wavelength structure according to claim 1, **characterized by** the sub-wavelength structure basic unit is completely continuous in each cycle.

3.  The method for regulating a phase of a wide-band electromagnetic wave by using a meta-surface sub-wavelength structure according to claim 1, **characterized by** two curves are obtained by translating the curve along the optical axis a distance $\Delta$ (0 to $\lambda$) smaller than the wavelength of the incident electromagnetic wave and forming a closed area by connecting the ends of the two curves together, the closed area defining the shape of the sub-wavelength structure basic unit.

4.  The method for regulating a phase of a wide-band electromagnetic wave by using a meta-surface sub-wavelength structure according to claim 1, **characterized by** the translated distance of the basic unit of each of the sub-

wavelength structures $\Delta<\lambda$, and the horizontal length $\Lambda>\lambda$, where $\lambda$ is the wavelength of the incident electromagnetic wave.

5. The method for performing wideband electromagnetic wave phase modulation by using a meta-surface sub-wavelength structure according to claim 1, **characterized by** the basic unit or periodic array of the sub-wavelength structure produces a deflection of $\theta=\sigma\arcsin(\lambda/\Lambda)$ on the circularly polarized light, where $\sigma=\pm1$ represents the left and right circular polarization..

6. The method for performing wideband electromagnetic wave phase modulation by using a meta-surface sub-wavelength structure according to claim 1, **characterized in that** said sub-wavelength structure array focuses the parallel beams in accordance with a predefined phase arrangement for optical Imaging.

7. The method for performing wideband electromagnetic wave phase modulation by using a meta-surface sub-wavelength structure according to claim 1, **characterized in that** the sub-wavelength structure array is arranged in accordance with a predefined phase arrangement so that the parallel beams pass through the structure to produce a beam with an orbital angular momentum OAM.

8. The method for performing wideband electromagnetic wave phase modulation by using a meta-surface sub-wavelength structure according to claim 1, **characterized in that** the sub-wavelength structure array is arranged in accordance with a predefined phase arrangement so that the parallel beams pass through the structure to produce low and high order Bessel (HOBB) beams.

9. The method for performing wideband electromagnetic wave phase modulation by using a meta-surface sub-wavelength structure according to claim 1, **characterized in that** the sub-wavelength structure is scaled for use in other band electromagnetic waves.

10. A meta-surface sub-wavelength structure, **characterized by** comprising:
a plurality of sub-wavelength structure basic unit, wherein the sub-wavelength structure basic units are arranged in accordance with a rule determined by a predetermined phase to form a meta-surface sub-wavelength structure array in which the shape of the sub-wavelength structure basic unit is defined by the following curve:

(1) a curve formed by integrating the phase distribution function of the predefined spatial variation;
(2) a closed area defined by the curve defines a shape of the sub-wavelength structure basic unit.

11. The meta-surface sub-wavelength structure according to claim 10, **characterized by** two curves are obtained by translating the curve along the optical axis a distance $\Delta$ ($0\sim\lambda$) smaller than the wavelength of the incident electromagnetic wave, and forming a closed area by connecting the ends of the two curves together, the closed area defining the shape of the sub-wavelength structure basic unit.

12. The meta-surface sub-wavelength structure according to claim 10, **characterized by** the sub-wavelength structure basic unit is manufactured on a thin film having a thickness of 30 nm<Tg< 300 nm.

13. The meta-surface sub-wavelength structure of claim 12, **characterized by** the film is made of a metal or a dielectric.

14. The meta-surface sub-wavelength structure according to claim 13, **characterized by** the metal is gold, silver, copper, aluminum, chromium, cadmium, gold alloy, silver alloy, copper alloy, zinc alloy or aluminum alloy.

15. The meta-surface sub-wavelength structure of claim 13, **characterized by** the dielectric is one or more of the following semiconductor materials: monocrystalline silicon, polysilicon, germanium, silicon dioxide or gallium arsenide.

16. The meta-surface sub-wavelength structure of claim 10, **characterized by** the sub-wavelength structure of the substrate uses a different material in a different band.

17. The meta-surface sub-wavelength structure according to claim 16, **characterized by** the materials used for the work of the substrate in the optical band include a dielectric material such as quartz, plexiglass, silicon, or the like.

18. A meta-surface sub-wavelength structure according to claim 16, **characterized in that** the material used by the substrate in the microwave section comprises a microwave dielectric material such as FR4.

19. The meta-surface sub-wavelength structure according to claim 16, **characterized by** the material used for the work of the substrate in the infrared and terahertz bands comprises an infrared dielectric material such as silicon and germanium.

20. The meta-surface sub-wavelength structure according to claim 16, **characterized by** the substrate has a planar structure or a curved structure.

21. A meta-surface sub-wavelength structure according to claim 10, **characterized in that** said sub-wavelength structure is prepared on a film layer.

22. The meta-surface sub-wavelength structure of claim 10, **characterized by** the sub-wavelength structure comprises a complementary structure of apertures or apertures.

figure 1

figure 2

figure 3

figure 4

figure 5

figure 6

figure 7

figure 8

figure 9

figure 10

figure 11

figure 12

figure 13

figure 14

# INTERNATIONAL SEARCH REPORT

| International application No. |
|---|
| PCT/CN2016/088081 |

### A. CLASSIFICATION OF SUBJECT MATTER

G02F 1/01 (2006.01) i

According to International Patent Classification (IPC) or to both national classification and IPC

### B. FIELDS SEARCHED

Minimum documentation searched (classification system followed by classification symbols)

G02F1/-

Documentation searched other than minimum documentation to the extent that such documents are included in the fields searched

Electronic data base consulted during the international search (name of data base and, where practicable, search terms used)

CNPAT; CNKI; EPODOC; WPI; ISI: metamaterial?, metasurface?, sub-wavelength, phas+, modula+, control+, adjust+, continu+, broad, band, catenary

### C. DOCUMENTS CONSIDERED TO BE RELEVANT

| Category* | Citation of document, with indication, where appropriate, of the relevant passages | Relevant to claim No. |
|---|---|---|
| X | PU, Mingbo et al. "Catenary optics for achromatic generation of perfect optical angular momentum" SCIENCE ADVANCES, volume 1, 02 October 2015 (02.10.2015), the abstract, page 1, right column, line 6 to page 4, left column, line 8 from the bottom, and page 5, left column, line 3 from the bottom to right column, line 7, figures 1-5 | 1-3, 6-8, 10-15, 21, 22 |
| Y | PU, Mingbo et al. "Catenary optics for achromatic generation of perfect optical angular momentum" SCIENCE ADVANCES, volume 1, 02 October 2015 (02.10.2015), the abstract, page 1, right column, line 6 to page 4, left column, line 8 from the bottom, and page 5, left column, line 3 from the bottom to right column, line 7, and figures 1-5 | 4, 5, 9, 16-20 |
| Y | WANG, Yanqin et al. "Quasi-continuous metasurface for ultra-broadband and polarization-controlled electromagnetic beam deflection" SCIENTIFIC REPORTS, volume 5, 04 December 2015 (04.12.2015), the abstract, page 3, two paragraphs from the bottom, and figures 2-4 | 4, 5, 9, 16-20 |

☒ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 13 December 2016 | 30 December 2016 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>SUN, Xian<br><br>Telephone No. (86-10) 62413961 |

Form PCT/ISA /210 (second sheet) (July 2009)

## INTERNATIONAL SEARCH REPORT

| International application No. |
|---|
| PCT/CN2016/088081 |

C (Continuation).     DOCUMENTS CONSIDERED TO BE RELEVANT

| Category* | Citation of document, with indication, where appropriate, of the relevant passages | Relevant to claim No. |
|---|---|---|
| X | LI, Xiong et al. "Dynamic Control of the Extraordinary Optical Scattering in Semicontinuous 2D Metamaterials" ADVANCED OPTICAL MATERIALS, volume 4, 28 January 2016 (2016-01-28), page 659, right column, two paragraphs from the bottom to page 660, left column, paragraphs1 and 2, and page 662, right column, and figures 1 and 2 | 1-3, 7, 10-14, 21, 22 |
| A | LI, Xiong et al. "Catenary nanostructures as compact Bessel beam generators" SCIENTIFIC REPORTS, volume 6, 04 February 2016 (2016-02-04), the whole document | 1-22 |
| A | CN 104584326 A (DUKE UNIVERSITY) 29 April 2015 (29.04.2015) the whole document | 1-22 |
| A | US 2010314040 A1 (TOYOTA MOTOR ENG. MFG. NORTH AMERICA, INC. et al.) 16 December 2010 (16.12.2010) the whole document | 1-22 |

Form PCT/ISA /210 (continuation of second sheet) (July 2009)

**INTERNATIONAL SEARCH REPORT**
Information on patent family members

| International application No. |
| --- |
| PCT/CN2016/088081 |

| Patent Documents referred in the Report | Publication Date | Patent Family | Publication Date |
| --- | --- | --- | --- |
| CN 104584326 A | 29 April 2015 | IL 235536 A | 29 January 2015 |
| | | US 9268016 B2 | 23 February 2016 |
| | | US 2013335256 A1 | 19 December 2013 |
| | | IN 10174DEN2014 A | 21 August 2015 |
| | | EP 2847823 A2 | 18 March 2015 |
| | | WO 2014025425 A2 | 13 February 2014 |
| | | US 2016266248 A1 | 15 September 2016 |
| | | KR 20150042746 A | 21 April 2015 |
| | | US 2015030256 A1 | 29 January 2015 |
| | | US 9411042 B2 | 09 August 2016 |
| US 2010314040 A1 | 16 December 2010 | None | |

**EP 3 447 564 A1**

**Patent documents cited in the description**

- CN 201610249928
- CN 201310312163
- CN 200710176013
- CN 20081010602
- CN 201410317149
- CN 201520096254